(19) Europäisches Patentamt

European Patent Office

Office européen des brevets

(11) **EP 1 285 026 B1**

(12) **EUROPEAN PATENT SPECIFICATION**

(45) Date of publication and mention
of the grant of the patent:
**07.01.2004 Bulletin 2004/02**

(51) Int Cl.[7]: **C08L 23/18**

(86) International application number:
**PCT/FI2001/000461**

(21) Application number: **01934045.4**

(22) Date of filing: **14.05.2001**

(87) International publication number:
**WO 2001/088031 (22.11.2001 Gazette 2001/47)**

(54) **A DRAG REDUCING COMPOSITION**

REIBUNGSVERMINDERNDE ZUSAMMENSETZUNG

COMPOSITION REDUISANT LA RESISTANCE AU FROTTEMENT

(84) Designated Contracting States:
**AT BE CH CY DE DK ES FI FR GB GR IE IT LI LU
MC NL PT SE TR**

(30) Priority: **15.05.2000 FI 20001153**

(43) Date of publication of application:
**26.02.2003 Bulletin 2003/09**

(73) Proprietor: **Fortum OYJ
02150 Espoo (FI)**

(72) Inventors:
  • **KARHU, Esa
  FIN-06150 Porvoo (FI)**
  • **KARHU, Mika
  FIN-06150 Porvoo (FI)**

• **ROCKAS, Leif
  FIN-06150 Porvoo (FI)**
• **HARJUHAHTO, Hannu
  FIN-06100 Porvoo (FI)**

(74) Representative: **Träskman, Berndt Hilding
Berggren Oy Ab,
P.O. Box 16
00101 Helsinki (FI)**

(56) References cited:
  **EP-A1- 0 605 857          WO-A1-95/00558
  WO-A1-95/00563          WO-A1-97/01582
  WO-A1-98/16586          WO-A1-99/37396
  US-A- 4 190 069**

## Description

### Field of the invention

The invention relates to a drag reducing agent composition, a process for the preparation of a drag reducing agent composition, and a method for reducing the drag of hydrocarbon flowing.

### Prior art

When a fluid, such as a liquid hydrocarbon, is fed through a conduit, friction resulting from the fluid stream causes a pressure drop increasing with the distance from the point(s) of feeding. Such a friction loss, also called drag, increases the energy and equipment costs required for fluid transportation through the conduit

In order to reduce drag, a variety of polymeric materials have been used as additives in the fluid. Suitable materials have been polymers (= homopolymers and copolymers) of olefins, especially very high molecular weight, non-crystalline and hydrocarbon soluble polymers of $C_3$-$C_{30}$ $\alpha$-olefins. In order to facilitate the storage, transport and feeding of the drag reducing polymeric materials, they have been provided in various forms.

In addition to dry solid polymers, slurries of ground polymers have been used, but they tend to agglomerate with time. Polymer particles coated with an anti-agglomerating agent have, on the other hand, limited solubility in the hydrocarbon fluid to be fed. Solutions and gels of polymers demand special equipment for delivery and injection. They are also limited to 10% per weight of polymer as maximum concentration, which is inconvenient.

WO 97/01582 discloses a drag reducing agent composition made by polymerizing an $\alpha$-olefin in a solvent, adding to the resulting polymer solution a non-solvent which precipitates the polymer as small particles, separating from the resulting slurry supernatant solvent and non-solvent, and reducing the amount of solvent further by adding additional non-solvent and/or evaporating the solvent The solvents used in this document are typically kerosene, jet fuel, as well as paraffinic and isoparaffinic solvents. Typical non-solvents are $C_2$-$C_6$ mono- and polyhydric alcohols, ethers, ketones and esters. Also, anti-agglomeration agents such as metal salts of higher fatty acids may be added in an amount of from 25 to 75% of the weight of the polymer.

WO 98/16586 discloses a drag reducing agent composition which has been made by coating particles of a poly-$\alpha$-olefin with a non-agglomeration (partitioning) agent which e.g. is a fatty acid wax (monoester), a metal salt of a fatty acid, or a fatty acid amide. Then, the coated poly-$\alpha$-olefin particles are dispersed in < $C_{14}$ monohydric alcohols, < $C_{14}$ glycols as well as polypropylene and polyethylene glycol ethers.

The above technical solutions in which the drag reducing polymer is dispersed in alcohols, ethers, ketones and esters, still have the disadvantage that the dispersion medium is incompatible with the hydrocarbon fluid, the drag of which is to be reduced.

The purpose of the invention is to provide a drag reducing agent composition, which is effective and compatible with the hydrocarbon fluid to be fed through the conduit. Also, the composition should have sufficiently high concentration and be easy to prepare and handle. The raw materials of the composition should be cheap and easily available.

### The present invention

The objects of the invention have now been accomplished by providing a drag reducing agent composition which primarily is characterized by a dispersion containing:

(a) 1-60% of a polymer capable of reducing drag, provided in the form of a hydrocarbon gel,
(b) 40-99% of a natural fat or natural oil, both based on the combined weight of (a) and (b).

Preferably, the dispersion also contains:

(c) 0.1-50% of an additive, most preferably a dispersion stabilising agent, based on the weight of (a), (b) and (c).

Adcantageously, components (a), (b) and (c) form at least 80%, most preferably at least about 90% of the weight of the whole drag reducing agent composition. When all three components are present, the above limits become 0.5-59.4% of component (a), 20-98% of component (b) and 0.1-50% of component (c), based on the combined weight of (a), (b) and (c).

By dispersion is meant a system, in which particles of a dispersed phase are not connected but separated from each other by a dispersion medium (Römpps Chemie-Lexicon, 7. Aufl. (1973), 2. Teil, 875).

### Detailed description of the invention

As stated above, high molecular weight non-crystalline polymers capable of reducing drag are *per se* well-known in the art, and a skilled person knows how to select them. Preferable polymers are high molecular weight (Mw > $3 \cdot 10^5$ g/mol) $C_2$-$C_{30}$ olefin polymers which are essentially non-crystalline, hydrocarbon soluble and capable of reducing hydrocarbon liquid drag. They may be homopolymers or copolymers of said olefins, whereby the comonomer may be another olefin, see EP-A1-0 223 889, page 3, line 38-44, or e.g. a divinyl monomer such as divinyl benzene or divinyl siloxane, see US 5,276,116, col. 2, 1. 45, - col. 3, 1. 4. Needless to say, a copolymer is a polymer which contains more than one type of repeat unit (Alger, M. S. M., Polymer Science Dictionary, 1990, Elsevier Appl. Sci., page 86), including terpolymers.

Preferably, said polymer is an ultra high molecular weight (UHMW, Mw > $3 \cdot 10^6$ g/mol) non-crystalline $C_3$-$C_{30}$ α-olefin polymer, more preferably an UHMW $C_4$-$C_{20}$ α-olefin polymer, and most preferably an UHMW $C_5$-$C_{12}$ α-olefin polymer Such polymers are e.g. used in WO 97/01582, which on page 5, lines 5-12, mentions poly-α-olefins having molecular weights as high as $10 \cdot 10^6$ g/mol, having commercial names starting with FLO® and being sold by Baker Pipeline Products, a division of Baker Performance chemicals, Inc.

Thus, the poly-α-olefins of the invention are easily selected by a skilled person. They may also easily be prepared, e.g. by the methods of Mack and Mack *et al.* See the examples in columns 11-18 of US 4,415,714, columns 7-10 of US 4,358,572 and column 4 of US 4,289,679, in which α-olefins are polymerized in the presence of a Ziegler-Natta system comprising titanium chloride, an electron donor, and an alkyl aluminium cocatalyst and the polymerization is stopped at below about 20% conversion. Such polymers are soluble in hydrocarbon fluids and act as drag reducing agents.

Typical α-olefin homopolymers are polybutene-1, polyhexene-1, polyoctene-1, polydecene-1, polyhexadecene-1 and polyeicosene-1. Typical α-olefin copolymers are propene-dodecene-1 copolymer, butene-1-dodecene-1 copolymer, butene-1-decene-1 copolymer, hexene-1-dodecene-1 copolymer, octene-1-tetradecene-1 copolymer, butene-1-decene-1-dodecene-1 copolymer, propene-hexene-1-dodecene-1 copolymer, etc. Preferred polymers are polyhexene-1, polyoctene-1, polydecene-1, polydodecene-1, polytetradecene-1, propene-dodecene-1 copolymer, butene-1-decene-1 copolymer, butene-1-dodecene-1 copolymer and hexene-1-dodecene-1 copolymer. Especially preferred are polyhexene-1 and polyoctene-1.

In addition to the polymer acting as a drag reducing agent for the hydrocarbon fluids, the claimed composition contains a natural fat or natural oil. Preferably, it contains a fatty oil. A fat or fatty oil which can be selected is a solid, semi-solid or liquid product of a plant or an animal, which chemically consists essentially of a mixture of glycerin esters of higher fatty acids which have an even number of carbon atoms (Römpps Chemie-Lexicon, 7. Aufl. (1973), 2. Teil, 1101). Naturally, single glycerin esters and synthetic glycerin ester mixtures can also be selected for the invention. Corresponding synthetic fats or fatty oils are also within the claimed scope of protection.

In the art, the natural fats and natural fatty oils are subdivided according to the dominant individual fatty acid. Thus, fats which may be used in the invention are lauric acid-myristic acid fats like coconut fat, palmitic acid fats like palm fat and stearic acid fats like cocoa butter. However, the fats only melt at temperatures between 24 and 47°C, so, for dispersion, injection and distribution into the hydrocarbon fluid, they have to be heated.

Therefore, the fatty oils are preferred to the fats. Typical fatty oils are the palmitic acid oils such as palm oil the oleic acid-linoleic acid oils such as olive oil, the linolenic acid oils such as linseed oil, perilla oil and hemp oil, and the eruca acid oils such as rapeseed oil and mustard oil. Preferred oils are those based on or containing essential amounts of lauric acid, palmitic acid, stearic acid, oleic acid, linoleic acid and/or myristic acid. Such oils are soybean oil, sun flower oil, linseed oil, perilla oil, hemp oil, rapeseed oil and mustard oil, and the most preferable are linseed oil and rapeseed oil. Also other oils such as tall oil, based on fatty acids and resin acids such as abietic acid, can be selected for the invention. For fats and oils which can be selected for the invention, see also Ullmanns Encyclopadie der Technischen Chemie, 3. Aufl., 7. Band, pages 477-482.

Although the polymer can be dispersed in the fat or oil mechanically, the addition of a dispersion stabilising agent is preferred. Preferable dispersion stabilising agents are dispersion agents such as emulsifiers and other anti-agglomeration agents. For the invention, conventional emulsifiers can easily be be selected which establish the right boundary layer activity between the polymer and the fat or fatty oil. Such emusifiers are given by Ullmanns Encyclopädie der Technischen Chemie, 3. Aufl., 6. Band, page 504-507. Other useful anti-agglomeration agents can be selected from non-soap metal (e.g. Zn) salts of fatty acids.

However, preferred emulsifiers are O/W oil/water type anionically active species such as soaps and a soap-like substances. Even more preferred are alkali metal, alkaline earth metal or ammonium soaps of fatty acids having from 12 to 22 carbon atoms. Most preferred are the alkali or alkaline earth metal soaps of the very fatty acid, on which the main component of the fat or fatty oil is based. Such a useful dispersion stabilising agent is e.g. the sodium salt of linseed or rapeseed oil.

The dispersion of the drag reducing composition of the invention contains, when a dispersion stabilising agent is present, 0.5 to 59.4% of component (a), 20 to 98% of component (b) and 0.1 to 50% of component (c), based on the combined weight of (a), (b) and (c). See above.

Preferably, the amount in said dispersion of said polymer (a) is from 5 to 50% by weight, more preferably from 10 to 40% by weight, most preferably from about 20 to about 30% by weight, based on the combined weight of (a), (b) and (c).

Independently, the amount in said dispersion of said natural fat or natural oil (b) is preferably from 50 to 95% by weight, more preferably from 60 to 90% by weight, most preferably from 70 to 80% by weight, based on the combined weight of (a), (b) and (c).

Further, independently, the amount in said dispersion stabilising agent (c) is preferably from 0.5 to 10% by weight, more preferably from 1 to 5% by weight, most preferably from 2 to 3% by weight, based on the combined weight of (a), (b) and (c).

The claimed composition may also contain other components, which improve its properties.

In addition to the above described drag reducing agent composition, the invention also relates to a process for the preparation of a drag reducing agent composition. According to the prior art, the preparation of useful drag reducing agent compositions has proved all but an easy task. As was mentioned above, the polymer particles tend to agglomerate, have low solubility, or either form too dilute or incompatible compositions.

These problems have now been solved by a process, essentially characterized in that a dispersion is formed from (a) the earlier mentioned 1-60% of the earlier mentioned polymer capable of reducing drag and (b) the earlier mentioned 40-99% of the earlier mentioned fat or fatty oil, both percentages being calculated on the combined weight of (a) and (b).

The dispersion may be formed merely by mechanical means, but it is preferable if a dispersion is formed from (a) said amount of said polymer, (b) said amount of said fat or fatty oil and from (c) the earlier mentioned 0.1-50% of the earlier mentioned additive, preferably dispersion stabilising agent, calculated on the combined weight of (a), (b) and (c).

The polymer (a), fat or fatty oil (b), and dispersion stabilising agent (c) are essentially selected as described above in connection with the description of corresponding components (a), (b) and (c) for the claimed drag reducing agent composition. The same applies for the final amounts of said components.

The polymer is provided in the form of a hydrocarbon gel. For instance, the gel may comprise from 1 to 20% by weight, preferably from about 2 to about 10% by weight of said polymer, the rest being essentially hydrocarbon, containing residual monomer if present Typically, the gel is formed when polymerizing an $\alpha$-olefin-hydrocarbon to a conversion which is below 20%.

Before or during contacting the polymer gel with the natural fat or natural oil, it is preferably disintegrated by feeding it through a disintegrating apparatus, preferably a flaker or the like, the size of the flakes or pellets preferably being between 0.1 and 6.0 mm, most preferably beteween 0.5 and 3.0 mm. A convenient flaker is a gear pump, whereby the gears cut off pieces which then come out in the form of said flakes or pellets. Preferably, the gel is fed on the suction side of a circulation gear pump in an apparatus for the dispersion of the components, whereby said disintegration of the gel takes place simultaneously with the dispersion thereof in said fat or oil (and dispersion stabilising agent).

The claimed process may be carried out with or without precontacting the disintegrated gel with a fat or fatty oil.

According to one embodiment of the invention, said polymer is at least once precontacted with and separated from a natural fat or natural oil before it is finally dispersed in said natural fat or natural oil. Preferably, the precontacting fat or oil is the same fat or oil as the one in which the polymer is finally dispersed. The precontacting is advantageously carried out at room temperature, and the precontacting weight ratio between said polymer gel and said fat or oil is preferably between 1:0.5 and 1:10, most preferably between 1:2 and 1:4.

After the precontacting, the polymer is concentrated. The concentration is preferably carried out by separating the polymer from the fat or oil gravimetrically or by centrifuging, with sieves, filters, cyclones, etc., most preferably by vacuum filtration, after which the polymer is dispersed in said fat or oil. The amounts are such as to achieve the above mentioned composition. The dispersion is preferably carried out by means of a dispersion mixer comprising a feed gear pump for feeding the polymer and a ciculation gear pump and return pipe for recirculation of the polymer/fat or fatty oil mixture. A typical temperature is 40-150°C, preferably 50-100°C. A typical dispersion time is from 2 to 100 h, preferably from 10 to 50 h.

After precontacting and dispersing the polymer in said fat or fatty oil, unnecessary fat or fatty oil may be removed, preferably by sieving, most preferably by sieving with a 40-100 µm sieve. Then, said dispersion stabilising agent is added. It is preferably added under stirring, more preferably under vigorous stirring, most preferably by means of a homogenization apparatus, e.g. one comprising a geared pump equipped with a check valve and recirculation. Finally, the formed mixture may be stirred for 0.5-10h, preferably for about 2 to about 6 h, e.g. by using a blade mixer at 50-200 rpm.

According to another embodiment of the invention, said polymer is not precontacted, but contacted directly with a mixture of said fat or fatty oil and said dispersion stabilising agent Then, the polymer is usually dispersed in said fat or oil by mixing at elevated temperature, preferably at 40-150°C, more preferably at 50-100°C, whereby, most preferably, the polymer is in the form of a gel. A final stirring may be carried out as at the end of the precontacting embodiment, see above.

The dispersion stabilising agent is preferably a soap and has more preferably been prepared *in situ* by reacting said fat or fatty oil with a base of an alkali metal or an alkaline earth metal, most preferably by partially saponifying the fat or fatty oil used as dispersion medium, thus forming a mixture of the fat or fatty oil and the dispersion stabilising agent.

In addition to the claimed drag reducing agent composition and its preparation, the invention also relates to a method for reducing the drag of hydrocarbon flowing. The method is characterized by the steps of:

A. providing a drag reducing agent composition according to the above product description or prepared according to the above process description,

B. feeding the drag reducing agent composition into a conduit in which the hydrocarbon is or will be flowing.

Preferably, the drag reducing agent composition is fed in an amount of about 1-200 ppm, preferably 10-100 ppm, most preferably 20-80 ppm.

The following examples, in which the parts and percentages are on a weight basis. unless otherwise indicated, are merely provided to illustrate the invention.

## Examples

## Measuring methods

The methods used for characterising the drag reducing agent compositions, henceforth called DRA, can crudely be subdivided into the physical properties (dry matter, viscosity) and the actual performance properties (DPT, DFT, Visko 50).

The dry matter of a gel sample is determined by removing the gel solvent(s) by evaporating in a heating chamber. In addition to the polymer, the gel hardly contains other solids, so, the dry matter gives the polymer content of the product. The dry matter of the gel is a remarkable physical property in so far as the performance reached at the site of use depends on the amount of polymer dissolved in the fluid, i.e. when feeding to the fluid equal masses or volumes of different products, most effective agent is fed with the product having the larges dry matter.

The viscosity is the dynamic viscosity (cP) measured by a Brookfield viscometer using different shear rates (e.g. 0.5, 1, 2.5, 5, 10, 20, 50 and 100 rpm).

The DPT (= delta pressure vs. time) is a life span analysis. The sample to be tested is fed to a solvent circulation system maintained by a gear pump. By measuring the outlet pressure, the dissolution of the sample can be followed and thereafter the gradual disappearance of the drag reducing effect can be followed as the sample one time after another passes the pump. In DPT measurements, attention is especially paid to the percent DPT, which is obtained as an integral by summing up the differences between the reference pressure and the momentary pressures during the measurement. The drag reduction can be calculated using the following equation:

$$\% \text{ drag reduction} = (p_0 - p_S)/p_0 \times 100$$

wherein $p_0$ is the measured drop occuring when the test fluid without drag reducing agent was pumped through the test line, and $p_S$ is the measured pressure drop occuring when the test fluid containing the drag reducing agent was pumperd through the test line.

DFT (= delta force vs. time) is used to measure the efficiency of the DRA in a hydrocarbon solvent, which is vigorously agitated. In the measurement, the registered percentage of drag reduction tells the efficiency of the DRA, which is the better, the larger the% drag reduction. $C_0$ indicates the amount (in ppm) of DRA which is needed to reach 67% of the maximal efficiency under the conditions of measurement.

The Visko 50 test is based on measuring the kinematic viscosity of the sample. A 50 ppm solution of the DRA is prepared, the viscosity of which is compared to the viscosity of pure solvent The result of a Visko 50 test contains information about the solubility of the DRA as well as its ability to alter the viscoelastic properties of the hydrocarbon fluid. The DRA is considered the better, the larger the Visko 50 value is.

## Preparation

### 1. Apparatus

### Apparatus

- The dispersion apparatus consisted of a cone bottomed vessel equipped with a heat jacket and a circulation stirrer. The cover of the vessel had a water-cooled column with a connection for the removal of distillate. It also had a separate cooler for the liquidification of effluent gases.

- A separate circulation gear pump and a return pipe were connected to the bottom of the dispersion apparatus.

- Another separate feed gear pump was provided for the injection of the polymer gel into the fatty oil (and the dispersion stabilising agent).

- A vacuum pump was provided e.g. for filtration between and after the contacting stages.

- A homogenizating apparatus of the stator-rotor type was also used having a stepless speed rotation control.

### 2. Precontacting method

A gel was provided containing 5-10% (see each Example) of polymer. The gel was then added to a fatty oil (rapeseed oil was used in the examples), the weight ratio between said polymer gel and said fatty oil being between between 1:2 and 1:4 (see each Example). The contacting temperature was 20°C. After precontacting, the precontacting gel/fatty oil mixture was transferred onto a vacuum sieve, where the polymer gel particles were separated from the fatty oil.

After the precontacting and the separation, the final amount of fresh fatty oil was added to the separated polymer gel particles in the dispersion apparatus. The amount of gel corresponded to a polymer (dry matter) to fat or fatty oil weight ratio of 1:3-1:9 (see each example). Thereafter, the gel/fatty oil mixture was mixed for 18 h at 70°C.

After the mixing, excess of the fatty oil was removed by filtering, using an 88 µm filter, giving the final amounts of polymer and fatty oil (20-30% of polymer and 70-80% of fatty oil, depending on the Example). After the removal, the final amount (2-3%, depending on the Example) of the dispersion stabilising agent was added and the final mixture was homogenized by a laboratory homogenizator (gear pump /check valve / recirculation). After the homogenization, the dispersion was still stirred with a laboratory stirrer for 4 h.

### 3. Direct contacting method, including preparation of dispersion stabilising agent

Suitable amounts of linseed fatty oil and a sodium salt thereof as dispersion stabilising agent (molar ratio e.g. 20:80) are mixed together at room temperature. Alternatively, linseed oil and a 50% NaOH solution are mixed together at about 80°C to form a linseed oil/ sodium salt (soap) mixture having the same molar ratio.

At elevated temperature, possible volatile impurities are allowed to leave by evaporation. Said mixture is kept in the described dispersing apparatus.

Then, the temperature is regulated to about 60°C and the feed gear pump is started. Polymer gel is fed through the feed gear pump and out through a small nozzle into a circulated stream of said mixture of linseed oil and a sodium salt thereof. Feeding takes place on the suction side of a circulation gear pump of the apparatus which then cuts the polymer gel into small pellets of 0.5 to 3.0 mm, which are easily dispersed in the hot mixture. The gel pellets are rapidly heated whereby the hydrocarbon gel solvent is removed by evaporation. The feed of gel is continued until the desired composition (see e.g. the claims) has been reached.

After the dispersion, the product is finally homogenized by means of the above described laboratory homogenizator.

### Examples

### Example 1 (precontacting method)

The preparation of the dispersion was started by feeding 4.5 kg of $\alpha$-olefin based polymer gel, the polymer content of which was 6.5% by weight into 11 kg of rapeseed oil at room temperature. The resulting gel/oil mixture was vacuum sieved and the treated gel particles were recovered for further treatment. To the polymer gel particles was added 1.8 kg of pure rapeseed oil and the resulting mixture was mixed for 18 h at 70°C. After the mixing, excess rapeseed oil was removed by an 88 µm sieve, and then, 30 g of a sodium salt of rapeseed oil was added as dispersion stabilising agent and the mixture was homogenized with a laboratory homogenizer.

Finally, the dispersion was mixed with a blade stirrer for 4 h.

### Analysis of the product

The weight of the polymer/oil mixture after the vacuum filtration was 1.401 kg. The weight of the polymer/oil mixture after the mixing at 70°C was 1.192 kg. The polymer content of the final dispersion was 24.4%. The DPT value was 31.7%, the DR value was 29.0%, the $C_0$ value was 5.7 and the Visko 50 value was 0.234.

### Example 2 (precontacting method)

The preparation of the dispersion was started by feeding 1.8 kg of $\alpha$-olefin based polymer gel, the polymer content of which was 6.5% by weight into 5.5 kg of rapeseed oil at room temperature (20°C). The resulting gel/oil mixture was vacuum sieved and the treated gel particles were recovered for further treatment. To the polymer gel particles was added 0.9 kg of pure rapeseed oil and the resulting mixture was mixed for 18 h at 70°C. Simultaneously, the hydrocarbon present in the gel was removed by evaporation and recovered for reuse. After the mixing, excess rapeseed oil was removed by an 88 µm sieve, and then, 20 g of a sodium salt of rapeseed oil was added as dispersion stabilising agent and the mixture was homogenized for 5 min with a laboratory homogenizer. Finally, the dispersion was mixed with a blade stirrer for 4 h.

### Analysis of the product

The weight of the polymer/oil mixture after the vacuum sieving was 1.031 kg. The weight of the polymer/oil mixture after the mixing at 70°C was 0.5 kg. The polymer content of the final dispersion was 25.8%. The DPT value was 31.4%, the DR value was 28.7%, the $C_0$ value was 7.8, and the Visko 50 value was 0.152.

### Example 3 (direct contacting method)

1850 g of linseed oil and 10 g of 50% NaOH solution were fed into the vessel of the dispersion apparatus by means of vacuum. The temperature was raised to 80°C while mixing. The added compounds were allowed to react for 1 h while maintaining the tempreature and the vacuum.

Then, the temperature was regulated to 60°C and a gear circulation pump was started. The circulation pump circulated the mixture from the vessel through a return pipe back to the vessel. Then, a feeding gear pump was started and 18700 g of the drag reducing polymer gel was slowly fed by it through a 2 mm nozzle onto the suction side of the circulation pump. The circulation pump cut the fed polymer gel into 0.5-3 mm long pieces which were dispersed into the hot mixture of oil and stabilising agent

After the hydrocarbon solvent evaporation stopped, the dispersion was finally homogenized.

**Analysis**

The dry matter of the homogenous dispersion was about 24%. The drag reducing properties were tested in a DPT apparatus, and the viscosity was measured from a 50 ppm solution. The DPT value was 34.5%, the DR value was 25.5%, the $C_0$ value was 7.2, and the visko 50 value was 0.159.

**Example 4**

In the preparation of the dispersion, the drag reducing polymer gel Necadd 547® was used. In the polymerization of the polymer, only hexane was used as monomer, and no solvent.

To 100 l of soybean oil 30 l of said Necadd 547® was fed. The feeding of the gel took place by means of a flaking apparatus, in which the gel is contacted with the 20°C oil stream in the form of small flakes. The oil/gel mixture was transferred directly into a disperser equipped with a steam jacket, in which the mixture was heated to 80°C and hexene was removed by means of vacuum. The removal of the monomer took 4 h.

After that, the mixture was transferred to a tank. Excess oil was removed from the mixture with a vacuum sieve, 200 g of stabilizer ES 2 was added and homogenization was carried out with a laboratory homogenizer (gear pump/check valve/recirculation, homogenizing time 5 min). The mixer was a 100 rpm paddle mixer.

After the vacuum sieving, the weight of the polymer/oil mixture was 3.2 kg. The polymer content of the final disperiosn was 25%.

**Analysis**

The DPT was 32.3%, the DR was 25.0%, the $C_0$ was 8.0, the Visko 50 was 0.216, the particle size D 50 $\mu$m 312, D 90 $\mu$m 594 and D 10 $\mu$m 86.

**Claims**

1. Process for the preparation of a drag reducing agent composition, wherein a dispersion is formed from:

   (a) 1-60% of a polymer capable of reducing drag, and

   (b) 40-99% of a natural fat or natural oil, based on the combined weight of (a) and (b), **characterized in that** said polymer is provided in the form of a hydrocarbon gel.

2. Process according to claim 1, **characterized in that** the gel comprises 1-20% by weight, preferably about 2 to about 10% by weight of said polymer.

3. Process according to claim 1 or 2, **characterized in that** said gel has been disintegrated by feeding it through a disintegrating apparatus, preferably a flaker or a gear pump, the size of the flakes preferably being 0.1-6.0 mm, most preferably 0.5-3.0 mm.

4. Process according to claim 3, **characterized in that** said gel has been disintegrated in or into said natural fat or natural oil.

5. A process according to any one of the preceding claims, **characterized in that** said dispersion is formed from:

   (c) 0.1-50% of an additive, preferably a dispersion stabilising agent, based on the combined weight of (a), (b) and (c).

6. A process according to any one of the preceding claims, **characterized in that** said polymer is a high molecular weight (Mw > $3 \cdot 10^5$ g/mol) $C_2$-$C_{30}$ olefin polymer (= homopolymer or copolymer) which is essentially non-crystalline, hydrocarbon soluble.

7. A process according to claim 6, **characterized in that** said polymer is an ultra high molecular weight (UHMW, Mw > $3 \cdot 10^6$ g/mol) $C_2$-$C_{30}$-$\alpha$-olefin polymer, preferably an UHMW $C_4$-$C_{20}$-$\alpha$-olefin polymer, most preferably an UHMW $C_6$-$C_{14}$-$\alpha$-olefin polymer.

8. A process according to any one of the preceding claims, **characterized in that** said natural fat or natural fatty oil is a natural fat or fatty oil, the main component of which is based on lauric acid, palmitic acid, stearic acid, oleic acid, linoleic acid and/or myristic acid.

9. A process according to claim 8, **characterized in that** said fatty oil is selected from soybean oil, sunflower oil, linseed oil, perilla oil, hemp oil, rapeseed oil and mustard oil, and preferably is linseed or rapeseed oil.

10. A process according to any one of claims 5 to 9, **characterized in that** said dispersion stabilising agent (c) is an emulsifying agent, preferably an O/W type anionically active species such as a soap and a soap-like substance.

11. A process according to claim 10, **characterized in that** said dispersion stabilising agent is an alkali metal, alkaline earth metal or ammonium soap of a fatty acid having from 12 to 22 carbon atoms, preferably an alkali or alkaline earth metal soap of the fatty acid, on which the main component of the fat or fatty oil is based, most preferably the sodium salt of linseed or rapeseed oil.

12. A process according to any one of the preceding claims, **characterized in that** the amount in said dispersion of said polymer is 5-50% by weight, preferably 10-40% by weight, most preferably about 20-30% by weight.

13. A process according to any one of the preceding claims, **characterized in that** the amount in said dispersion of said natural fat or natural oil is 50-95% by weight, preferably 60-90% by weight, most preferably 70-80% by weight.

14. A process according to any one of the preceding claims, **characterized in that** the amount in said dispersion of said dispersion stabilising agent is 0.5-10% by weight, preferably 1-5% by weight, most preferably 2- 3% by weight.

15. Process according to any one of the preceding claims, **characterized in that** said polymer is at least once precontacted with and separated from a natural fat or natural oil before it is dispersed in said fat or fatty oil.

16. Process according to claim 15, **characterized in that** the natural fat or natural oil of said precontacting is the same fat or oil, preferably fatty oil, as the one in which the polymer is dispersed.

17. Process according to claim 15 or 16, **characterized in that** in said polymer gel is precontacted with a stream of natural fat or natural oil, preferably at room temperature.

18. Process according to claim 17, **characterized in that** in said precontacting, the weight ratio between said polymer gel and said natural fat or natural oil is 1:0.5-1:10, preferably 1:2-1:4.

19. Process according to any of claims 15-18, **characterized in that** after said precontacting, the polymer dispersion is concentrated.

20. Process according to any of claims 15-19, **characterized in that** after said precontacting and concentration, the polymer dispersion is redispersed in said natural fat or natural fatty oil.

21. Process according to any one of the preceding claims, **characterized in that** after dispersing the polymer in said natural fat or natural fatty oil, said dispersion stabilising agent is added.

22. Process according to claim 21, **characterized in that** said dispersion stabilising agent is added under stirring, preferably under vigorous stirring, most preferably by means of a homogenization apparatus.

23. Process according to any one of the preceding claims, **characterized in that** after the polymer and the natural fat or natural oil have been contacted with the dispersion stabilising agent, the formed mixture is stirred for 0.5-10h, preferably for about 2-6 h.

24. Process according to any one of claims 1-14, **characterized in that** said polymer is contacted with a mixture of said natural fat or natural oil and said dispersion stabilising agent.

25. Process according to any one of the preceding claims, **characterized in that** the polymer is dispersed in said natural fat or natural oil by mixing at an elevated temperature, preferably at 40-150°C, more preferably at 50-100°C.

26. Process according to any one of claims 5 to 25, **characterized in that** the dispersion stabilising agent has been prepared *in situ* by reacting said natural fat or natural fatty oil with a base of an alkali metal, alkaline earth metal or ammonium, most preferably by partially saponifying the fat or fatty oil, thus forming a mixture of the fat or fatty oil and the dispersion stabilising agent.

27. A method for reducing the drag of hydrocarbon flowing by

> A. providing a drag reducing agent composition prepared according to any one of claims 1-26,

> B. feeding the drag reducing agent composition into a conduit in which the hydrocarbon is or will be flowing, **characterized in that** the drag reducing agent composition is fed in an amount of about 1-200 ppm, preferably 10-100 ppm, most preferably 20-80 ppm, bond on the amount of said hydrocarbon.

**Patentansprüche**

1. Verfahren zur Herstellung einer reibungsvermindernden Zusammensetzung, wobei eine Dispersion geformt wird aus:

> (a) 1 bis 60 % eines Polymers, das in der Lage ist, die Reibung zu reduzieren, und

> (b) 40 bis 99 % eines natürlichen Fettes oder natürlichen Öls, bezogen auf das zusammengesetzte Gewicht von (a) und (b),

**dadurch gekennzeichnet, daß** das Polymer in Form eines Kohlenwasserstoffgels zur Verfügung gestellt wird.

2. Verfahren gemäß Anspruch 1, **dadurch gekennzeichnet, daß** das Gel 1 bis 20 Gew.%, bevorzugt ungefähr 2 bis ungefähr 10 Gew.%, dieses Polymers umfaßt.

3. Verfahren gemäß Anspruch 1 oder 2, **dadurch gekennzeichnet, daß** das Gel durch dessen Einleiten in einen Zersetzungsapparat zersetzt worden ist, bevorzugt eine Quetsche oder eine Zahnradpumpe, wobei die Größe der Splitter bevorzugt von 0,1 bis 6,0 mm reicht, am meisten bevorzugt von 0,5 bis 3,0 mm.

4. Verfahren gemäß Anspruch 3, **dadurch gekennzeichnet, daß** das Gel in das natürliche Fett oder natürliche Öl zerkleinert worden ist.

5. Verfahren gemäß einem der vorhergehenden Ansprüche, **dadurch gekennzeichnet, daß** diese Dispersion gebildet wird aus:

    (c) 0,1 bis 50 % eines Additivs, bevorzugt eines Dispersionsstabilisierungsmittels, bezogen auf die kombinierten Gewichte von (a), (b) und (c).

6. Verfahren gemäß einem der vorhergehenden Ansprüche, **dadurch gekennzeichnet, daß** das Polymer ein hochmolekulargewichtiges ($Mw > 3 \cdot 10^5$ g/mol) $C_2$-$C_{30}$-Olefinpolymer (= Homopolymer oder Copolymer) ist, welches im wesentlichen nicht-kristallin, Kohlenwasserstoff-löslich ist.

7. Verfahren gemäß Anspruch 6, **dadurch gekennzeichnet, daß** das Polymer ein ultramolekulargewichtiges (UHMW, $Mw > 3 \cdot 10^6$ g/mol) $C_2$-$C_{30}$-$\alpha$-Olefinpolymer, bevorzugt ein UHMW $C_4$-$C_{20}$-$\alpha$-Olefinpolymer, am meisten bevorzugt ein UHMW $C_6$-$C_{14}$-$\alpha$-Olefinpolymer ist.

8. Verfahren gemäß einem der vorhergehenden Ansprüche, **dadurch gekennzeichnet, daß** das natürliche Fett oder natürliche Fettöl ein natürliches Fett oder Fettöl ist, wobei der Hauptbestandteil davon auf Laurylsäure, Palmitinsäure, Stearinsäure, Oleinsäure, Linolsäure und/oder Myristinsäure beruht.

9. Verfahren gemäß Anspruch 8, **dadurch gekennzeichnet, daß** das Fettöl ausgewählt ist aus Sojabohnenöl, Sonnenblumenöl, Leinöl, Perillaöl, Hanföl, Rapsöl und Senföl, und bevorzugt Leinöl oder Rapsöl ist.

10. Verfahren gemäß einem der Ansprüche 5 bis 9, **dadurch gekennzeichnet, daß** das Dispersionsstabilisierungsmittel (c) ein Emulgator ist, bevorzugt eine anionisch wirksame Spezies vom O/W-Typ, wie beispielsweise Seife oder eine seifenartige Substanz.

11. Verfahren gemäß Anspruch 10, **dadurch gekennzeichnet, daß** das Dispersionsstabilisierungsmittel ein Alkalimetall, Alkalierdmetall oder Ammoniumseife oder eine Fettsäure mit 12 bis 22 Kohlenstoffatomen ist, bevorzugt eine Alkali- oder Alkalierdmetallseife der Fettsäure, auf der der Hauptbestandteil des Fettes oder Fettöls basiert, am meisten bevorzugt das Natriumsalz von Lein- oder Rapsöl.

12. Verfahren gemäß einem der vorhergehenden Ansprüche, **dadurch gekennzeichnet, daß** die Menge in der Dispersion dieses Polymers 5 bis 50 Gew.%, bevorzugt 10 bis 40 Gew.%, am meisten bevorzugt ungefähr 20 bis 30 Gew.% beträgt.

13. Verfahren gemäß einem der vorhergehenden Ansprüche, **dadurch gekennzeichnet, daß** die Menge in der Dispersion des natürlichen Fettes oder natürlichen Öls 50 bis 59 Gew.%, bevorzugt 60 bis 90 Gew.%, am meisten bevorzugt 70 bis 80 Gew.% beträgt.

14. Verfahren gemäß einem der vorhergehenden Ansprüche, **dadurch gekennzeichnet, daß** die Menge in der Dispersion an Dispersionsstabilisierungsmittel 0,5 bis 10 Gew.%, bevorzugt 1 bis 5 Gew.%, am meisten bevorzugt 2 bis 3 Gew.% beträgt.

15. Verfahren gemäß einem der vorhergehenden Ansprüche, **dadurch gekennzeichnet, daß** das Polymer mindestens einmal mit einem natürlichen Fett oder natürlichen Öl in Vorkontakt gebracht wurde und getrennt wurde, bevor es in diesem Fett oder Fettöl dispergiert wird.

16. Verfahren gemäß Anspruch 15, **dadurch gekennzeichnet, daß** das natürliche Fett oder natürliche Öl des vorhergehenden Inkontaktbringens das gleiche Fett oder Öl ist, bevorzugt Fettöl, wie das, in dem das Polymer dispergiert ist.

17. Verfahren gemäß Anspruch 15 oder 16, **dadurch gekennzeichnet, daß** das Polymergel vorher mit einem natürlichen Fett- oder natürlichen Ölstrom, bevorzugt bei Raumtemperatur, in Kontakt gebracht wird.

18. Verfahren gemäß Anspruch 17, **dadurch gekennzeichnet, daß** das Gewichtsverhältnis bei dem vorhergehenden Inkontaktbringen zwischen dem Polymergel und dem natürlichen Fett oder natürlichen Öl 1:0,5 bis 1:10, bevorzugt 1:2 bis 1:4 beträgt.

19. Verfahren gemäß einem der Ansprüche 15 bis 18, **dadurch gekennzeichnet, daß** die Polymerdispersion nach diesem vorhergehenden Inkontaktbringen konzentriert wird.

20. Verfahren gemäß einem der Ansprüche 15 bis 19, **dadurch gekennzeichnet, daß** die Polymerdispersion nach dem vorhergehenden Inkontaktbringen und der Konzentrierung in dem natürlichen Fett oder natürlichen Fettöl redispergiert wird.

21. Verfahren gemäß einem der vorhergehenden Ansprüche, **dadurch gekennzeichnet, daß** nach dem Dispergieren des Polymers in dem natürlichen Fett oder natürlichen Fettöl das Dispersionsstabilisierungsmittel hinzugegeben wird.

22. Verfahren gemäß Anspruch 21, **dadurch gekennzeichnet, daß** das Dispersionsstabilisierungsmittel unter Rühren hinzugegeben wird, bevorzugt unter heftigem Rühren, am meisten bevorzugt mit Hilfe eines Homogenisierungsapparates.

23. Verfahren gemäß einem der vorhergehenden Ansprüche, **dadurch gekennzeichnet, daß** nachdem das Polymer und das natürliche Fett oder natürliche Öl mit dem Dispersionsstabilisierungsmittel in Kontakt gebracht worden sind, das gebildete Gemisch für 0,5 bis 10 h, bevorzugt für ungefähr 2 bis 6 h, gerührt wird.

24. Verfahren gemäß einem der Ansprüche 1 bis 14, **dadurch gekennzeichnet, daß** das Polymer mit einem Gemisch aus dem natürlichen Fett oder natürlichen Öl und dem Dispersionsstabilisierungsmittel in Kontakt gebracht wird.

25. Verfahren gemäß einem der vorhergehenden Ansprüche, **dadurch gekennzeichnet, daß** das Polymer in dem natürlichen Fett oder natürlichen Öl durch Mischen bei einer erhöhten Temperatur, bevorzugt bei 40 bis 150°C, mehr bevorzugt bei 50 bis 100°C, dispergiert wird.

26. Verfahren gemäß einem der Ansprüche 5 bis 25, **dadurch gekennzeichnet, daß** das Dispersionsstabilisierungsmittel in situ durch das Umsetzen des natürlichen Fettes oder natürlichen Fettöls mit einer Base eines Alkalimetall, eines Alkalierdmetalls oder mit Ammonium hergestellt worden ist, am meisten bevorzugt durch teilweises Verseifen des Fettes oder Fettöls, wodurch ein Gemisch des Fettes oder Fettöls und des Dispersionsstabilisierungsmittels gebildet wird.

27. Verfahren zum Vermindern der Reibung eines Kohlenwasserstofflusses durch

A. das Zurverfügungstellen einer Zusammensetzung, welche ein reibungsverminderndes Mittel enthält, gemäß jedem der Ansprüche 1-26,

B. das Einleiten in eine Leitung, in der sich der Kohlenwasserstoff fließt oder fließen wird, **dadurch gekennzeichnet, dass** das die Zusammensetzung, welche ein reibungsminderndes Mittel enthält, in einer Menge von ungefähr 1-200 ppm, bevorzugt 10-100 ppm, am meisten bevorzugt 20-80 ppm, bezogen auf die Menge des Kohlenwasserstoffs, eingeleitet wird.

## Revendications

1. Procédé pour la préparation d'une composition d'agent réduisant la résistance au frottement, dans laquelle on forme une dispersion à partir de :

(a) 1-60 % d'un polymère capable de réduire la résistance au frottement, et
(b) 40-99 % d'une graisse naturelle ou huile naturelle, sur la base de la masse combinée de (a) et (b), **caractérisé en ce que** ledit polymère est fourni sous la forme d'un gel hydrocarboné.

2. Procédé selon la revendication 1, **caractérisé en ce que** le gel comprend 1-20 % en poids, de préférence d'environ 2 à environ 10 % en poids dudit polymère.

3. Procédé selon la revendication 1 ou 2, **caractérisé en ce que** ledit gel a été déchiqueté en le chargeant à travers un appareil déchiquetant, de préférence une fragmenteuse ou une pompe à engrenages, la taille des paillettes étant de 0,1-6,0 mm, de préférence de 0,5-3,0 mm.

4. Procédé selon la revendication 3, **caractérisé en ce que** ledit gel a été déchiqueté dans ladite graisse naturelle ou huile naturelle.

5. Procédé selon l'une quelconque des revendications précédentes, **caractérisé en ce que** ladite dispersion est formée de :

(c) 0,1-50 % d'un additif, de préférence un agent stabilisant la dispersion, sur la base de la masse combinée de (a), (b) et (c).

6. Procédé selon l'une quelconque des revendications précédentes, **caractérisé en ce que** ledit polymère est un polymère (= homopolymère ou copolymère)

d'oléfine en $C_2$-$C_{30}$ de masse moléculaire élevée (Mw > $3 \cdot 10^5$ g/mol) qui est essentiellement non cristallin, soluble dans les hydrocarbures.

**7.** Procédé selon la revendication 6, **caractérisé en ce que** ledit polymère est un polymère d'α-oléfine en $C_2$-$C_{30}$ d'ultra haute masse moléculaire (UHMW, Mw > $3 \cdot 10^6$ g/mol), de préférence un polymère d'α-oléfine UHMW en $C_4$-$C_{20}$, et mieux encore un polymère d'α-oléfine UHMW en $C_6$-$C_{14}$.

**8.** Procédé selon l'une quelconque des revendications précédentes, **caractérisé en ce que** ladite graisse naturelle ou huile grasse naturelle est une graisse ou huile grasse naturelle, dont le principal composant est à base d'acide laurique, d'acide palmitique, d'acide stéarique, d'acide oléique, d'acide linoléique et/ou d'acide myristique.

**9.** Procédé selon la revendication 8, **caractérisé en ce que** ladite huile grasse est choisie parmi l'huile de soja, l'huile de tournesol, l'huile de lin, l'huile de périlla, l'huile de chanvre, l'huile de colza et l'huile de moutarde, et est de préférence l'huile de lin ou l'huile de colza.

**10.** Procédé selon l'une quelconque des revendications 5 à 9, **caractérisé en ce que** ledit agent (c) stabilisant la dispersion est un agent émulsifiant, de préférence une espèce anioniquement active de type O/W telle qu'un savon et une substance savonneuse.

**11.** Procédé selon la revendication 10, **caractérisé en ce que** ledit agent stabilisant la dispersion est un savon de métal alcalin, de métal alcalino-terreux ou d'ammonium d'un acide gras ayant de 12 à 22 atomes de carbone, de préférence un savon de métal alcalin ou alcalino-terreux de l'acide gras, sur lequel est basé le composant principal de la graisse ou de l'huile grasse, et mieux encore le sel de sodium d'huile de lin ou de colza.

**12.** Procédé selon l'une quelconque des revendications précédentes, **caractérisé en ce que** la quantité dudit polymère dans ladite dispersion et de 5-50 % en poids, de préférence de 10-40 % en poids, et mieux encore d'environ 20-30 % en poids.

**13.** Procédé selon l'une quelconque des revendications précédentes, **caractérisé en ce que** la quantité de ladite graisse ou huile naturelle dans ladite dispersion est de 50-95 % en poids, de préférence de 60-90 % en poids, et mieux encore de 70-80 % en poids.

**14.** Procédé selon l'une quelconque des revendications précédentes, **caractérisé en ce que** la quantité dudit agent stabilisant ladite dispersion est de 0,5-10 % en poids, de préférence de 1-5 % en poids, et mieux encore de 2-3 % en poids.

**15.** Procédé selon l'une quelconque des revendications précédentes, **caractérisé en ce que** ledit polymère est au moins mis en contact préliminaire avec une graisse naturelle ou une huile naturelle et séparé de celle-ci avant d'être dispersé dans ladite graisse ou huile grasse.

**16.** Procédé selon la revendication 15, **caractérisé en ce que** la graisse naturelle ou l'huile naturelle dite de contact préliminaire est une graisse ou huile, de préférence une huile grasse, identique à celle dans laquelle le polymère est dispersé.

**17.** Procédé selon la revendication 15 ou 16, **caractérisé en ce que** dans ledit polymère gel est mis en contact préliminaire avec un courant de graisse naturelle ou d'huile naturelle, de préférence à température ambiante.

**18.** Procédé selon la revendication 17, **caractérisé en ce que** dans ladite mise en contact préliminaire, le rapport en poids entre ledit gel polymère et ladite graisse naturelle ou huile naturelle est de 1 : 0,5-1 : 10, de préférence 1 : 2-1 : 4.

**19.** Procédé selon l'une quelconque des revendications 15-18, **caractérisé en ce qu'**après ladite mise en contact préliminaire, on concentre la dispersion polymère.

**20.** Procédé selon l'une quelconque des revendications 15-19, **caractérisé en ce qu'**après ladite mise en contact préliminaire et concentration, on redisperse la dispersion polymère dans ladite graisse naturelle ou huile grasse naturelle.

**21.** Procédé selon l'une quelconque des revendications précédentes, **caractérisé en ce qu'**après la dispersion du polymère dans ladite graisse naturelle ou huile grasse naturelle, on ajoute ledit agent stabilisant à ladite dispersion.

**22.** Procédé selon la revendication 21, **caractérisé en ce que** ledit agent stabilisant la dispersion est ajouté, sous agitation, de préférence sous vigoureuse agitation et encore plus préférablement au moyen d'un appareil d'homogénéisation.

**23.** Procédé selon l'une quelconque des revendications précédentes, **caractérisé en ce qu'**après avoir mis en contact le polymère et la graisse naturelle ou huile naturelle avec l'agent stabilisant la dispersion, on agite le précédent mélange pendant 0,5-10 h, de préférence pendant environ 2-6 h.

**24.** Procédé selon l'une quelconque des revendications 1-14, caractérisé en ce ledit polymère est mis en contact avec un mélange de ladite graisse naturelle ou huile naturelle et ledit agent stabilisant la dispersion.

**25.** Procédé selon l'une quelconque des revendications précédentes, **caractérisé en ce qu'**on disperse le polymère dans la dite graisse naturelle ou huile naturelle par mélange à une température élevée, de préférence à 40-150 °C, et mieux encore à 50-100 °C.

**26.** Procédé selon l'une quelconque des revendications 5 à 25, **caractérisé en ce qu'**on prépare l'agent stabilisant la dispersion *in situ* en mettant à réagir ladite graisse naturelle ou huile grasse naturelle avec une base d'un métal alcalin, d'un métal alcalino-terreux ou d'ammonium, et mieux encore par saponification partielle de la graisse ou huile grasse, formant ainsi un mélange de la graisse ou de l'huile grasse et de l'agent stabilisant la dispersion.

**27.** Procédé pour la réduction de la résistance au frottement d'un flux d'hydrocarbure par :

> A. la fourniture d'une composition d'agent réduisant la résistance au frottement, préparée selon l'une quelconque des revendications 1 à 26,
> B. l'introduction de la composition d'agent réduisant la résistance au frottement dans une conduite dans laquelle l'hydrocarbure circule ou circulera, **caractérisée en ce que** la composition d'agent réduisant la résistance au frottement est introduite en une quantité allant de 1 à 200 ppm, de préférence de 10 à 100 ppm et encore plus préférablement de 20 à 80 ppm, par rapport à la quantité dudit hydrocarbure.